# EUROPEAN PATENT APPLICATION

(11) **EP 2 081 363 A1**
(43) Date of publication of application: **22.07.2009**
(21) Application number: 08300033.1
(22) Date of filing: 15.01.2008
(51) Int. Cl.: H04L 29/06, H04L 12/56, H04L 29/08

(54) **System and method for selecting a set of serving peers**

(71) Applicant: Thomson Licensing, Inc., 92100 Boulogne-Billancourt (FR)
(72) Inventor: Lubbers, Willem, 35510, CESSON SEVIGNE (FR); Gautier, Eric, 35700, RENNES (FR); Gerard, Francois, 56800, PLOERMEL (FR)
(74) Representative: Ruellan-Lemonnier, Brigitte

(57) **Abstract**

The present invention concerns a method at a receiver (14) for selecting at least one serving device (11, 12, 13) for providing content, the receiver comprising communicating means (141) for connecting to a network (15) comprising a plurality of devices adapted to provide the content.

To this end, the method comprises the steps of getting (20) the list of devices in the network, selecting (S22, S24, S26), among the list of devices (11, 12, 13), a set of serving devices (11, 12) and the streaming data rate per the serving devices for providing the content, where each serving device streams a portion of the content, connecting (S28, S29) to the serving devices, and on detection of a streaming data rate variation from a serving device, adjusting (S45) the number of serving device and/or adjusting (S32) the streaming data rate per serving device.

## Description

### FIELD OF THE INVENTION

The present invention relates generally to peer to peer content distribution networks and in particular to methods and devices for selecting the serving peers.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Video-on-demand distribution is mainly based on centralized client-server architecture. It requires the deployment of powerful servers with a high-bandwidth connection serving a multitude of clients. The servers are generally over dimensioned to be able to cope with peak demands. The network providing the video-on-demand service is also over dimensioned. This architecture is not very scalable. And this model makes it nearly impossible for a service provider to serve large audiences while still continuing to generate profit. Peer-to-peer networks, noted P2P networks hereinafter, are an interesting alternative to the centralized model. Peer-to-peer distribution models rely on the use of each receiver's unused capacities and allow to relax the constraints laid on the network. Initially P2P networks were used to download content. They were not used for streaming content. Streaming content using a P2P network as a source is more complex than downloading content from such a network. Downloading does not have to count with real-time issues such as respect of delivery delays between packets and packet order. These are parameters that are difficult to manage in a P2P network where peers are unpredictable in their behavior because they are free to disconnect or use their available bandwidth for other activities.

Video streaming over a peer-to-peer network is problematic since streaming video over this type of network is prone to interruptions. Peers serving content can suddenly disconnect with or without notification for several reasons. The upstream bandwidth of a serving peer can suffer from a sudden reduction, for example in a triple play environment where the available upstream bandwidth is shared between applications such as IP television, IP telephony and internet. A serving peer can also be powered down or enter the standby state.

WO2007021725 patent application from SIEMENS, discloses a method focusing on dispersing the sources of a receiving peer. A sudden peer drop-out is compensated by another peer that can serve the same content. But these drop-outs or temporary reductions of streaming rate result in visual effects such as glitches, video acceleration or deceleration and video freezing until the serving is correctly re-established.

Another solution increases receiving peer buffer size, to avoid buffer underrun. The buffer size is dimensioned to be able to cope with a number of distortions per period of time. Increasing the reception buffer size of a receiving peer results in a system with added latency and slower user response. Buffer sizes of ten to twenty seconds can be considered as necessary to add a certain error tolerance to a system. This is particularly true for video content, where a movie has a typical length of more than one hour, and no or very few artifacts are allowed during the movie duration. This buffering delay is present when a user selects a new video, selects a new chapter, or restarts play after a trick mode action such as pause, fast forward or fast reverse. Furthermore, the buffer size calculation is either fixed and based on a presumed occurrence of artifacts per unit of time, or modulated during reception time, based on statistics done during the reception time.

Another solution adds erase-resilient codes to replace missing information. Adding erase-resilient codes can correct drop-outs within a certain extent, i.e. add missing information, but systems working with erase-resilient codes are relatively heavy to put into place and require important computational efforts on both server side (to generate the codes) and client side (to use the codes to replace missing information or to correct erroneous packets). Furthermore erase-resilient codes need extra bandwidth; the needed bandwidth is related to the type and duration of errors that are expected. The type and amount of erase resilient codes is generally fixed and based on assumptions on the type and duration of expected errors and drop outs, and therefore is designed to cope with a certain amount and type of errors.

This invention addresses one of these problems that are inherent to the streaming of video over a P2P network, namely the management of a receiving peer's reception buffer.

### SUMMARY OF THE INVENTION

The present invention concerns a method at a receiver for selecting at least one serving device for providing content, the receiver comprising communicating means for connecting to a network comprising a plurality of devices adapted to provide the content.

To this end, the method comprises the steps of getting the list of devices in the network, selecting, among the list of devices, a set of serving devices and the streaming data rate per the serving devices for providing the content, where each serving device streams a portion of the content, connecting to the serving devices, and on detection of a streaming data rate variation from a serving device, adjusting the number of serving device and/or adjusting the streaming data rate per serving device.

The receiver dynamically regulates itself the number of serving devices and the streaming data rate per serving device. The receiver performs the regulation based on detection of streaming data rate variation. This permits the receiver to react early enough so that the receiver buffer filling level is maintained at a level that avoids starvation of the rendering process.

Each serving device streams a portion of the content. When a receiver selects and connects to a device for receiving content, it indicates the streaming parameters to the device. The device may then continuously send the portion of the content to the receiver.

According to an embodiment, the receiver comprises a reception buffer, and the detection is performed on the reception buffer filling level and/or the reception buffer filling rate.

The streaming data rate variation is performed with the control of reception buffer parameters. The receiver buffer can be dimensioned to a relatively small value, because the decisional entity is located directly into the receiving peer, which allows for very fast intervention when needed.

According to an embodiment, the method comprises the step of setting buffer filling level and/or buffer filing rate limits, and when the buffer filling level and/or buffer filing rate is out of the limits, adjusting the streaming data rate per serving device, and/or adjusting the number of serving devices.

According to an embodiment, the method comprises the step of selecting, among the list of devices, at least one spare serving device, and selecting the spare serving device as a serving device in order to replace a serving device, or to increase the number of serving devices.

The receiver selects backup devices that are selected as serving devices when needed. This permits to accelerate the recovery.

According to an embodiment, when a missing packet is detected, the spare serving peer is selected as a serving device instead of the serving peer in charge of transmitting the packet.

According to an embodiment, the network is a peer to peer network.

Another object of the invention is a receiver device for selecting at least one serving device for providing content, where each serving device streams a portion of the content to the receiver, the receiver comprising communicating means for connecting to a network comprising a plurality of devices adapted to provide the content, storing means for buffering the received content, reception managing means for managing the storing means, and detecting streaming data rate variation and selecting means for selecting the number of serving device and the streaming data rate per serving device.

Another object of the invention is a computer program product comprising program code instructions for executing the steps of the process according to the invention, when that program is executed on a computer. By "computer program product", it is meant a computer program support, which may consist not only in a storing space containing the program, such as a diskette or a cassette, but also in a signal, such as an electrical or optical signal.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

### BRIEF DESCRIPTION OF THE DRAWINGS

The invention will be better understood and illustrated by means of the following embodiment and execution examples, in no way limitative, with reference to the appended figures on which:
- Figure 1 is a block diagram of a system according to the embodiment;
- Figure 2 is a block diagram of a receiving peer according to the embodiment;
- Figure 3 is a signal flow chart of a method according to the embodiment;
- Figure 4 is a flow chart of a first part of the method according to the embodiment at the receiving peer;
- Figure 5 is a flow chart of a second part of the method according to the embodiment at the receiving peer;
- Figure 6 is a first diagram illustrating the packet transmission and reception according to the embodiment; and
- Figure 7 is a second diagram illustrating the packet transmission and reception according to the embodiment.

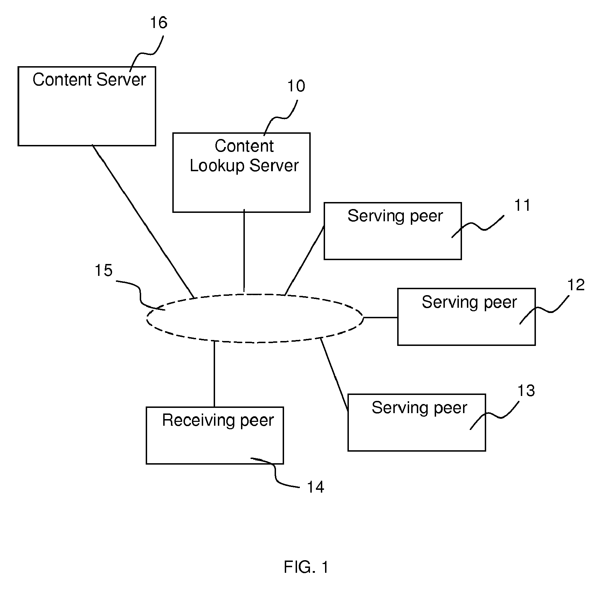

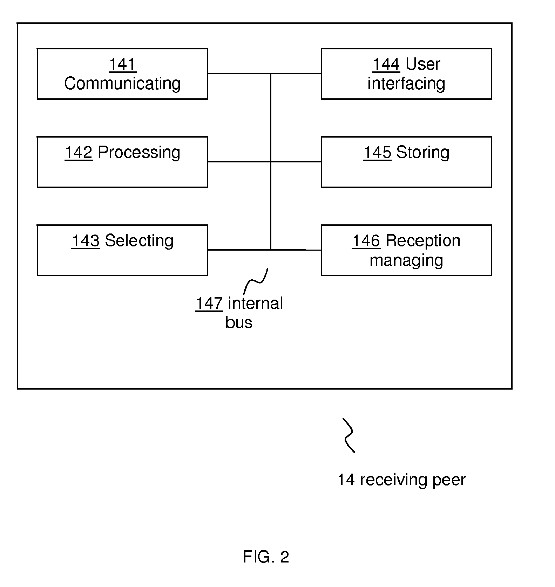

In Figures 1 and 2, the represented blocks are purely functional entities, which do not necessarily correspond to physically separate entities. Namely, they could be developed in the form of software, hardware, or be implemented in one or several integrated circuits.

### DETAILED DESCRIPTION OF PREFERRED EMBODIMENTS

The exemplary embodiment comes within the framework of a transmission on a peer to peer network, but the invention is not limited to this particular environment and may be applied within other frameworks where a device receives content from multiple serving devices.

The system according to the embodiment is represented in figure 1. The system comprises a content server 16, a content lookup server 10, noted CLS hereinafter, and multiple peers 11, 12, 13, 14. The devices are connected through the Internet 15. Of course the devices might be connected through any other network enabling connection of such servers and peers.

The content server 16 is adapted to provide initial content to the P2P network. Initially, when content is requested that no peer detains yet, this server may be used to fetch content from. Alternatively, when content is to be deployed over a P2P network, the content server may broadcast or unicast parts of that content over the network and upload on a selected number of peers.

The CLS 10 is adapted to maintain a record of the content on the network that is made available to the peers. It is a centralized server in a P2P network allowing a Receiving Peer to find Serving Peers for a given content.

A receiving peer 14 is a Set Top Box or any other device equipped with rendering capability. It is capable of receiving content for storage or immediate viewing; a Receiving Peer may also act as a serving peer for other receiving peers.

A serving peer 11, 12, 13 is a Set Top Box or any other device equipped with means to serve locally stored content to receiving peers. A Serving Peer may also act as a Receiving Peer.

A receiving peer according to the embodiment is illustrated in figure 2. It comprises a communication module 141 to interface to the Internet, in order to communicate with the servers and the other peers on the Internet. It comprises storing means 145 for storing samples received from the servers and the peers. According to the embodiment, the storing means is a reception buffer for receiving samples and reordering the samples received from multiple sources. The reception buffer size is usually much smaller than the total size of the content. Alternatively the storing means may also comprise a memory for storing all the received samples, so that the receiving peer acts as a serving peer.

The selecting module 143 is adapted to perform the serving peer selection. The reception managing module 146 is adapted to perform the management of the reception buffer. The receiver also comprises a processor 142 for executing the program running at the receiver and a user interface to enable the request of content. These components communicate by way of an internal bus 147.

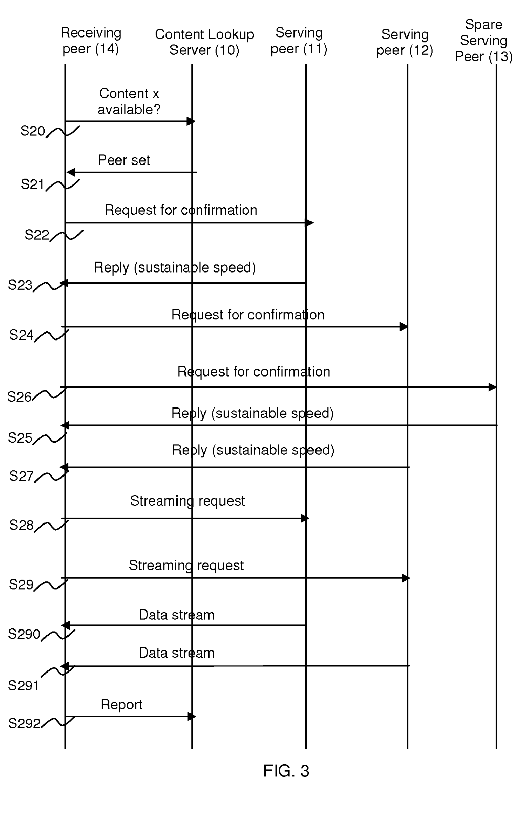

The selection method according to the embodiment is depicted in figure 3.

At step S20, the receiving peer wants to receive content x for immediate viewing. It searches for availability of the needed content on the network. Information on availability of content is made accessible at the CLS.

At step S21, the CLS provides a metadata file to the Receiving Peer, comprising the set of peers that comprise that content x. The metadata file contains information about the size of the file, bit rate and a list of peers with their connection address/IP port that have already stored the content completely or partially.

At steps S22, S24 and S26, the Receiving Peer 14 contacts the Serving Peers 11, 12, 13. It sends a request for confirmation to the serving peers. The request comprises, for content x, information on bit rate, offset, and sample ratio.

At steps S23, S25 and S27, the Serving Peers send an answer to the request by an acceptance or a refusal. If a Serving Peer accepts the request, it specifies the serving speed that it is likely to be able to sustain.

Upon receipt of the answers of the serving peers, the receiver constitutes a selection of this list that it will use to set up streaming session with these peers. The selection process comprises the selection of a set of peers. The number of peers in the set is preferably larger than the minimal number of peers required. This permits modulation of the number of peers if needed during the streaming session. The selected Serving Peers are able to sustain a serving speed that preferably exceeds the need of the receiver with a predetermined percentage. This allows the receiver to modulate the serving speed of the selected peers if needed during the streaming session.

The selection process can also include other parameters:
- permanent or temporary exclusion of peers that have proven to be unreliable, based on statistics that are kept by the Receiving Peer;
- preferred selection of peers that have proven to be reliable instead of "new" peers;
- exclusion of peers that have a connection path to the Receiving Peer that exceeds a predetermined number of network hops;
- preference of peers that have a connection path with the least number of network hops;
- or any other selection criterion that may influence the servicing quality of a peer;
- or any combination of the above.

Alternately, the CLS might also perform the selection for each of the receiving peers. It might also indicate some of the parameters indicated hereinabove in the metadata file.

The receiver may keep a list of serving peers that it does not need immediately but that it might need to activate during the streaming session. These are the spare peers. They are used at the receiver to recover a file that is not received by a serving peer. They are also used to replace a serving peer that has become inadequate.

When selected, the receiving peer sends a streaming request to each selected serving peer, at steps S28 and S29. Each streaming request comprises, for content x, the bit rate, the offset and the sample ratio.

The receiving peer then receives the data streams from the selected peers, at steps S290 and S291. It also sends a report to the CLS to update the CLS database, step S292.

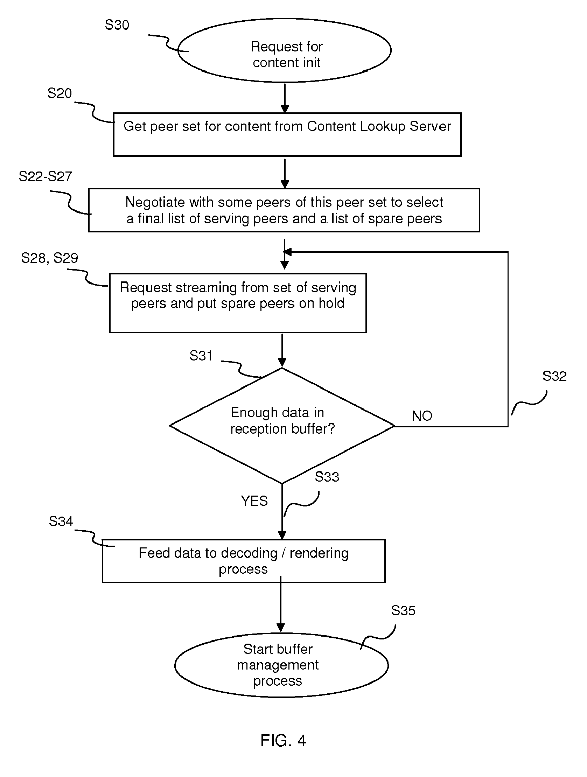

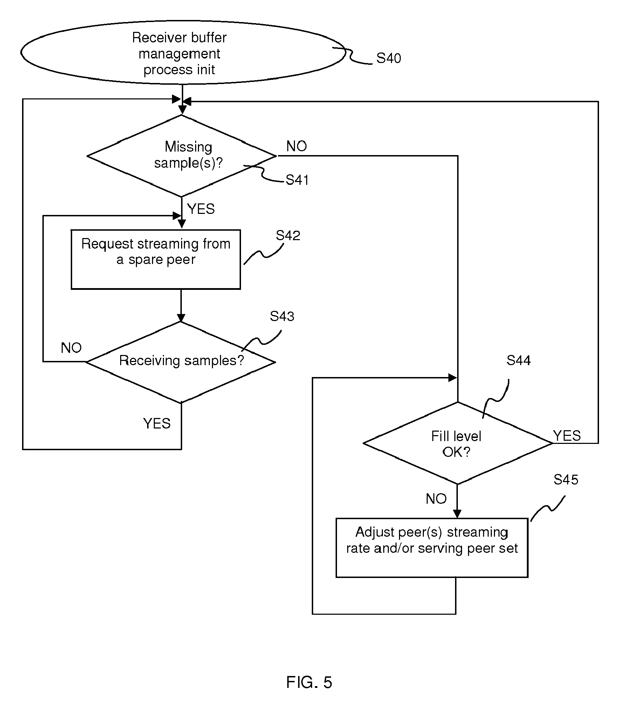

The initialization process at the receiving peer is further illustrated in figure 4 and 5.

Step S30 is an initialization phase where the receiving peer is requested for content reception. The request may come from an end user through the user interface.

The selection process is then performed, according to the process as described in the figure 3. The receiving peer, at step S20, gets information from the CLS. It then performs the peer selection, at steps S22-S27. At steps S28 and S29 it requests streaming from a set of selected serving peers. Some peers may be put on hold.

A step S31, the receiving peer checks whether the reception buffer contains enough data. If it does not contain enough data, S32, the receiving peer goes back to step S28 and S29, requesting for streaming from another set of peers. If it contains enough data, the decoding and rendering processes are launched, S33.

As indicated in figure 5, the receiver buffer management process then starts, S40. The reception managing module 146 of the receiver permanently checks whether samples are missing, S41. If no sample is missing, the reception managing module also checks whether the buffer filling level is acceptable, S44. If not, the receiver adjusts the streaming rate, and / or the number of serving peers. The reception managing module notifies the selecting module to adjust the set of peers.

If a sample is missing, the receiver requests the missing sample from one or more spare peers, steps S42 and S43.

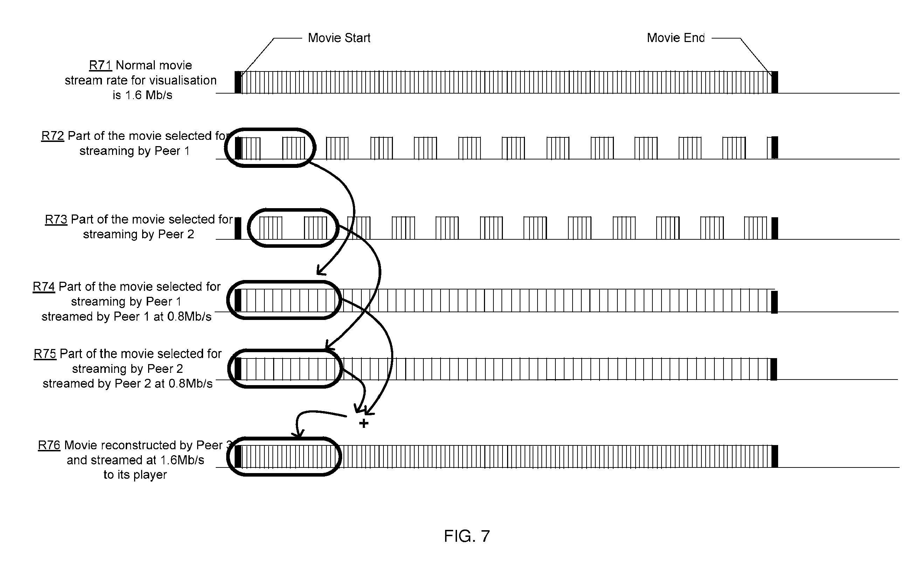

The selection process is further detailed with the aid of an example, in figure 7 that comprises six rows, noted R71 to R76. A video file represented in R71 is requested that has a constant streaming rate of 1.6Mbit/s. The above described selection process is reduced to the minimum needed.

The file is completely present on several Serving Peers. These peers can sustain a streaming rate of 800 kbit/s. The receiving peer selects two candidates from the list, serving peer 1 and serving peer 2, and sets up connections with them at 800 kbit/s. To be able to receive the video stream at 1.6 Mbit/s, the Receiving Peer negotiates with both Serving Peers to sample the content file with a ratio of 1:2 starting from distinct spots, as represented in R72 and R73. Each Serving Peer sends these samples at the rate of 800 kbit/s, R74 and R75. The received samples permit the receiving peer to reconstruct the movie, R76.

After this initialization phase, the reception buffer management begins. This management task consists in monitoring the filling rate of the video streaming reception buffer. If the monitoring task observes a drop in the filling rate, it may replace the responsible Serving Peer by another, picked from its list.

The stream reconstruction is a continuous process. It is not necessary to receive all parts of the movie to begin the reconstruction process. The reconstruction process is a function of the contents received at the reception buffer. The content buffer has a much lower size than the total size of the content. The receiving peer reconstructs the video stream coming from a multitude of clients. From the selection process, the Receiving Peer knows the sample size of each stream and where to place it in the reconstructed stream. However to protect against errors the protocol can include tagging of blocks, i.e. each sample can be accompanied by a byte range.

For higher bit rates than given in the example, the receiving peer may connect to more than two clients. A stream that has a visualization rate of 2.4 Mbit/s can be streamed by three Serving Peers at 800 kbit/s each. A 1:3 sample ratio is needed.

For bit rates that are not a direct multiple of a common divisor, the receiving peer may request streams from multiple serving peers at different rates. A stream has a visualization rate of 1.2 M bit/s, and the Serving Peers can send streams at a maximum bit rate of 800 kbit/s. The negotiation between the Receiving Peer and the Serving Peers can result in one peer sampling the stream from stream start at a sampling ratio of 2:3 and will be streamed at 800 kbits/s whereas the other peer will sample with a ratio of 1:3 and stream the samples at 400 kbits/s with a start offset of 2 samples. Another possible distribution scheme may be 2 x 600 kbits/s and 1:2 sample sizes. The second scheme is preferable since it leaves some room for other upload traffic on both serving peers. The skilled person in the art will appreciate that any such combination is possible at the receiver.

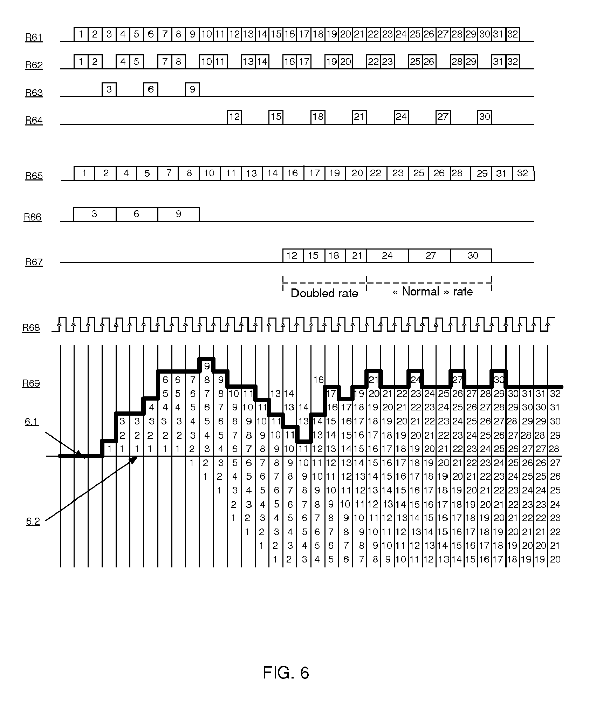

The buffer management is illustrated in figure 6 that comprises nine rows, from R61 to R69.
R61. a movie that is to be streamed at a speed of 1.2 Mbit/s. The movie is divided in sampling blocks of a specific size. The determination of the sample block size is detailed hereinafter. For comprehension of the figure, the blocks have been numbered from 1 to 32
R62. some samples of the movie are streamed by a Serving Peer A
R63. some samples of the movie are streamed by a Serving Peer B
R64. some samples of the movie are streamed by a Spare Serving Peer C
R65. the samples as sent by Serving Peer A
R66. the samples as sent by Serving Peer B
R67. the samples as sent by Serving Peer C
R68. the reception buffer clock of the Receiving Peer
R69. the contents of the reception and rendering buffers of the Receiving Peer over time. The line 6.1 indicates the reception buffer fill level. The line 6.2 separates the reception buffer above the line from the decoding/rendering buffer under the line.

According to the selection process, three Serving Peers are selected, peers A, B and C. In the initial connection setup, only Serving Peers A en B are selected to stream. Serving Peer C is put on hold, it is a Spare serving peer. The movie is streamed at 1.2 Mbit/s. Serving Peer A has informed the receiver that it can sustain a streaming speed of 800 kbit/s. Serving Peer B has informed the receiver that it can sustain a streaming speed of 400 Mbit/s. Serving Peer A is therefore requested by the receiver to stream 2/3rd of the movie at 800 kbit/s. Serving Peer B is therefore requested to stream 1/3rd of the movie at 400 kbit/s. The portion of the movie that is streamed by each Serving Peer is thus related to its sustainable serving speed.

For reasons of simplicity, the chosen serving speed that is requested by the Receiving Peers is the sustainable serving speed as announced by each Serving Peer. As explained previously in this document, it may be preferable to request a lower serving speed in order to improve the robustness of the streaming.

Serving Peer A is requested to stream 2 samples out of 3, starting from the beginning of the movie, at a rate of 800kbit/s, as indicated in R62. Serving Peer B is requested to stream 1 sample out of 3, starting from sample number 3 of the movie, at a rate of 400kbit/s, R63.

R65 shows the samples as they are sent by Serving Peer A. R66 shows the samples as they are sent by Serving Peer B. The samples are sent with the indicated rates; therefore, the samples are stretched out over time when compared to R61. Notably, R65 shows that though A and B each sent their samples at a rate lower than the movie streaming rate, the combination of the two assures that at the reception of the 3rd sample, the movie streaming rate is respected.

As illustrated at R69, as the streaming from Serving Peer A and B starts, the reception buffer is filled. A sample is collected in the reception buffer when it is entirely received upon an ascending slope of the reception buffer clock R68. As the samples arrive, they are put in the right order in the reception buffer. When the buffer is filled at a certain level, the samples are fed to the decoding/rendering buffer and the stream visualization can start. A reception managing module is responsible for continuously monitoring the reception buffer filling level. The reception managing module maintains the buffer filling state at a desired level that avoids starvation of the rendering process. The desired level is a function of multiple parameters such as:
- the number of Serving Peers in the streaming session;
- the number of available peers that are not Serving peers;
- the impact on the receiving -rendering delay. A large reception buffer increases the delay between reception of the first sample and rendering;
- jitter; if there is a lot of jitter between samples, the buffer size can be increased to avoid starvation of the decoding/rendering process.

The reception managing module monitors the filling level of the reception buffer. This is illustrated by the line 6.1. When reception starts and the decoding/rendering process is inactive, the reception buffer fill filling level increases. Then, as there is enough data to ensure a seamless functioning of the decoding/rendering, the decoding/rendering process is started and the data in the reception buffer is fed into the decoding/rendering buffer. When the decoding/rendering consumption rate corresponds to the reception buffer fill filling rate, the fill filling level remains stable.

The buffer filling level may suddenly decrease. As illustrated in R69 after the reception of sample number 9, the sample number 12 is not received from Serving Peer B. As soon as the reception buffer management process detects that the sample number 12 has not been received, it activates Serving Peer C. Peer C sends the missing samples and continues streaming the following samples. Serving Peer B is put on hold. Of course more than one serving peer might be required to replace serving peer B.

Between the detection of the missing sample 12 and the reception of the sample 12 from the replacement Serving Peer C, the buffer filling level decreases.

In order to increase the buffer filling level, the receiver negotiates the reception of the streams at a rate higher than previously requested from Serving peer B. Here the rate is twice faster. As soon as the reception buffer filling level returns to the desired level, the receivers request a lower serving rate, in order to avoid reception buffer overflow.

The reception managing module monitors content reception of all Serving Peers individually. It knows exactly when to expect the next sample from which Serving Peer. The missing sample may then be detected before a connection drop is detected on a socket level. Of course, samples may also fail to arrive on time without a connection drop.

In order to ensure that the list of Spare serving peers is up to date, the reception managing module regularly contacts the CLS.

Connection drops can occur at any time. This can be caused by Serving Peers going into the standby state, or Serving Peers suddenly needing upload bandwidth. Especially in triple-play environments upload bandwidth is shared between internet traffic and internet telephony.

In addition to complete transmission interruption at the Serving Peer, the Serving Peer may also temporarily reduce the transmission rate. This may be due to the allocation of bandwidth to higher-priority traffic at the Serving peer. To avoid the receiving peer from switching incessantly between serving peers, the receiving peer may allow a certain reduction of the resulting receiver buffer filling level before reacting. After a temporary reduction of serving rate, a serving peer might itself temporarily increase the serving rate until it is reduced again by the receiving peer.

References disclosed in the description, the claims and the drawings may be provided independently or in any appropriate combination. Features may, where appropriate, be implemented in hardware, software, or a combination of the two.

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

## Claims

1. Method at a receiver (14) for selecting at least one serving device (11, 12, 13) for providing content, said receiver comprising communicating means (141) for connecting to a network (15) comprising a plurality of devices adapted to provide said content, said method comprising the steps of:
- getting (S20) the list of devices in said network,
- selecting (S22, S24, S26), among the list of devices (11, 12, 13), a set of serving devices (11, 12) and the streaming data rate per said serving devices for providing said content, where each serving device streams a portion of said content,
- connecting (S28, S29) to said serving devices, and
- on detection of a streaming data rate variation from a serving device, adjusting (S45) the number of serving device and/or adjusting (S32) said streaming data rate per serving device.

2. Method according to claim 1, **characterized in that** said receiver comprises a reception buffer (145), and said detection is performed on the reception buffer filling level and/or the reception buffer filling rate (146).

3. Method according to claim 2, **characterized in that** it comprises the step of:
- setting buffer filling level and/or buffer filing rate limits, and
- when the buffer filling level and/or buffer filing rate is out of said limits, adjusting said streaming data rate per serving device, and/or adjusting the number of serving devices.

4. Method according to any one of the claims 2 to 3, **characterized in that** it comprises the step of:
- selecting, among the list of devices (11, 12, 13), at least one spare serving device (13), and
- selecting (S42, S45) said spare serving device as a serving device in order to replace a serving device, or to increase the number of serving devices.

5. Method according to claim 4, **characterized in that** when a missing packet is detected, said spare serving peer is selected as a serving device instead of the serving peer in charge of transmitting said packet.

6. Method according to any one of the preceding claims, **characterized in that** said network is a peer to peer network.

7. Receiver device (14) for selecting at least one serving device (11, 12, 13) for providing content, where each serving device streams a portion of said content to said receiver, said receiver comprising:
- communicating means (141) for connecting to a network (15) comprising a plurality of devices adapted to provide said content;
- storing means (145) for buffering said received content;
- reception managing means (146) for managing the storing means, and detecting streaming data rate variation; and
- selecting means (143) for selecting the number of serving device and the streaming data rate per serving device.
